# EUROPEAN PATENT APPLICATION

(11) **EP 4 762 932 A1**
(43) Date of publication of application: **24.06.2026**
(21) Application number: 24222382.4
(22) Date of filing: 20.12.2024
(51) Int. Cl.: A22C 11/12, B65B 51/04, G08B 5/36

(54) **CLIPPING MACHINE WITH STATUS DEPENDENT LIGHTING**

(71) Applicant: Poly-clip System GmbH & Co. KG, 65795 Hattersheim (DE)
(72) Inventor: Giehl, Alexander, 67663 Kaiserslautern (DE)
(74) Representative: Eisenführ Speiser

(57) **Abstract**

The invention relates to a clipping machine (1) comprising a housing (25) defining an at least partially enclosed working space (27), a filling tube (3), a clipping tool assembly (5), a lighting assembly (33) comprising at least one light source (35), the lighting assembly (33) configured to provide light of at least a first color (LC1) and a second color (LC2) for illuminating the working space (27), and wherein the clipping machine (1) further comprises a lighting controller (41) con-figured to at least control the color of light provided by the lighting assembly (33), wherein the lighting controller (41) is configured to determine an operating status and to control the lighting assembly (33) such that the color of light provided by the lighting assembly (33) for illuminating the working space (27) is chosen dependent on the determined operating status (45).

## Description

The invention relates to a clipping machine for producing sausage-shaped products by filling a filling material into a packaging casing and closing the filled packaging casing with at least one closure clip, the clipping machine comprising a housing defining an at least partially enclosed working space, at least one filling tube for feeding the filling material into the packaging casing stored on the at least one filling tube, a clipping tool assembly for applying one or more closure clips to the packaging casing for closing the packaging casing, wherein at least the clipping tool assembly is at least partially arranged in the working space.

In practice, it is known that, for example in the production of sausage-shaped products, in particular sausages, filling material is fed by a filler through a filling tube into a tubular or bag shaped packaging casing. The filler provides and conveys the filling material. The packaging casing can be stored on the filling tube and can be closed at its front end and its back end by a clipping tool assembly of a clipping machine. For closing the packaging casing at least one closure clip is provided to the packaging casing as a closure means by the clipping tool assembly of the clipping machine. Prior to the application of the closure clip, a gathering means of the clipping tool assembly can form a plait-like portion to which the closure clip or a plurality of closure clips is subsequently provided. During filling, the tubular-shaped packaging casing is pulled-off from the filling tube while being filled by the pressurized filling material. Usually the filler providing the filling material and the clipping machine are separate machines. The filling tube of the clipping machine has an interface that matches a corresponding connector of the filler such that the filler can provide filling material to the filling tube. In some cases, the clipping machine controls the filler. For example, the clipping machine can stop the filler when the clipping tool assembly is operated to close a filled packaging casing (i.e. when a portion of packaging casing of the desired length is filled and a sausage shaped product is formed by closing the packaging casing with a closure clip).

The tubular-shaped packaging casing is made of a thin sheet material and can therefore burst easily, for example, if too much internal pressure is provided on the packaging casing by the filling material. Burst of a packaging casing during filling spills the filling material such that the clipping machine has to be cleaned. Moreover, products that are not filled evenly may be hard to sell. Smooth operation of the clipping machine is therefore of high importance in order to produce sausage-shaped products efficiently. To prevent waste, it might be required that an operator monitors the clipping machine continuously. Since clipping machines can have high cycle rates of less than 1 Hz, this can put significant pressure on an operator, in particular if the operator simultaneously operates multiple clipping machines. Pressure put on operators can be very high. It is therefore necessary to take the strain off machine operators and to enable them to gain insights into operation of the machine as quickly as possible.

Therefore, it is an object of the present invention to provide a clipping machine that is easy to operate.

In a first aspect, the present invention solves this problem with a clipping machine as defined in claim 1. In particular, the claimed invention relates to a clipping machine for producing sausage-shaped products by filling a filling material into a packaging casing and closing the filled packaging casing with at least one closure clip, the clipping machine comprising a housing defining an at least partially enclosed working space, at least one filling tube for feeding the filling material into the packaging casing stored on the at least one filling tube, a clipping tool assembly for applying one or more closure clips to the packaging casing for closing the packaging casing, wherein at least the clipping tool assembly is at least partially arranged in the working space, and a lighting assembly comprising at least one light source, the lighting assembly configured to provide light of at least a first color and a second color for illuminating the working space with light of the first color and/or the second color, wherein the housing is configured such that the light of the first color and/or the second color is visible from outside the housing, wherein the clipping machine further comprises a lighting controller configured to at least control the color of light provided by the lighting assembly, wherein the lighting controller is configured to determine at least one operating status of the clipping machine, and wherein the lighting controller is configured to control the lighting assembly such that the color of light provided by the lighting assembly for illuminating the working space is chosen dependent on the determined operating status. Preferred configurations of the claimed invention are defined in dependent claims 2 to 15.

The packaging casing is preferably substantially tubular or bag-shaped. The casing material can be a natural material or an artificial casing material, in particular a plastic casing material. The packaging casing can be stored on the filling tube in shirred form. A casing brake can be provided. The clipping tool assembly is configured to apply one or more closure means, preferably closure clip, to the packaging casing. Preferably, the clipping tool assembly is provided downstream of the filling tube. Preferably, the clipping tool assembly comprises at least one stamp and at least one die. The stamp and the die can be reversibly movable towards and away from each other. A closure clip can be provided around a plait-like potion of the packaging casing and can then be closed around the plait-like portion, preferably by deforming the clip. In other cases the closure clip can have some sort of locking mechanism that can be actuated by the clipping tool assembly. Preferably, the clipping tool assembly comprises gathering means. The gathering means can be configured to form a plait-like portion. For example and preferably, the gathering means can have a pair of separator blades that can apply a notch (such as with a pair of scissors) to the filled packaging casing. The gathering means can further be configured to spread the separators by laterally moving the separators relative to each other (one separator blade may be stationary). In other configurations, the gathering means can have an iris displacer that closes similar to the iris of an eye.

In the clipping machine of the present invention, the clipping tool assembly is at least partially arranged in a working space defined by a housing. The housing encloses the working space. This can improve safety of the clipping machine, as the housing can prevent an operator from reaching into the clipping tool assembly at least during operation. Preferably, the housing is configured to be opened. This can facilitate maintenance and/or cleaning of the working space. The housing may have a door or a pivotable section that allows access to the working space when pivoted away.

The lighting assembly can provide light to the enclosed working space. The lighting assembly comprises at least one light source. Preferably, the lighting assembly comprises multiple light sources, in particular 2 or more, 3 or more, 4 or more, 5 or more, 6 or more, 7 or more, 8 or more, 9 or more, 10 or more light sources. The light source can be or can comprise an LED. Moreover, the lighting assembly can comprise a driver, transformer or the like for supplying electric energy to the light source. The lighting assembly is configured to provide light of at least a first color and a second color. For example, a first light source of the lighting assembly can be configured to provide light of the first color while a second light source of the lighting assembly is configured to provide light of the second color. However, a single light source of the lighting assembly may be configured to provide light of multiple different colors. Preferably, the light of the first color and the light of the second color are in the visible spectrum. However, at least one of the light sources can be configured to provide ultraviolet light, preferably UV-A light (black light). UV-A light can facilitate cleaning of the working space as it can enhance visibility of organic matter. Moreover, UV-light can be utilized to at least partially sterilize or disinfect the enclosed working space or parts of the clipping tool assembly arranged therein. It shall be understood that a lighting assembly configured to provide UV light is also preferred for clipping machines as such. That is clipping machines are preferred that do not having a lighting controller as defined in claim 1, in particular a lighting controller configured to determine at least one operating status of the clipping machine. A light source configured to provide UV light is also preferred for clipping machines having a lighting assembly configured to provide light of only a single color.

The housing is configured such that the light of the first color and/or the second color is visible from the outside of the housing. For example, a wall of the housing may be at least partially transparent. The housing can additionally or alternatively comprise openings, slits or the like that allow visibility of the light from the outside. In other embodiments, the housing can have a window. Preferably, such a window can be opened. It shall be understood, that in order to be visible, the light provided to the enclosed working space has to physically leave the working space and enter into the eye of a viewer. However, in the present disclosure visibility is to be understood as used in the common speech, namely that the view of an observer "travels" to the lit working space and therefore the light (and its color) is visible from the outside. For example, light provided to the interior of a car may be visible from the outside through the windows of said car.

The lighting controller of the clipping machine is configured to control the lighting assembly. In particular, the lighting controller is configured to control the lighting assembly such that light of a certain color is provided by the lighting assembly. The lighting controller may be part of the lighting assembly. The lighting controller can be a main control unit of the clipping machine or part thereof. In preferred configurations, the lighting is a controller separate from a main control unit of the clipping machine. The lighting controller preferably is or comprises a computer, a microcontroller or the like. In some cases, the lighting controller comprises multiple controllers.

The lighting controller is configured to determine at least one operating status of the clipping machine or of a part of the clipping machine. Such an operating status may, for example, indicate that the clipping tool assembly is currently in operation. The lighting controller can be configured to receive status information from a main control unit of the clipping machine. If the lighting controller is configured to control one or more components of the clipping machine besides the lighting assembly, the lighting controller may be configured to determine the operating status of the clipping machine from control parameters or instructions that itself provides to said component. In other words, the lighting controller may determine the operating status from its control of the clipping machine. One or more sensors for measuring parameters indicating an operating status may be provided. For example, the lighting controller can be configured to determine a lubrication status of the clipping machine via a level sensor in a lubrication tank of the clipping machine.

The lighting controller is configured to control the lighting assembly such that the color of light provided by the lighting assembly is chosen dependent on the determined operating status. For example, the lighting controller can control the lighting assembly to provide light of the fist color if a first operating status is determined and to provide light of the second color if a second operating status is determined. This allows a color coding of the operating status which enables an operator of the clipping machine to quickly grasp information about the operation status and to determine therefrom whether any action is required. Usually the attention of a human operator of a clipping machine is focused on the working space as this is the location where products are produced. The inventors have found that illuminating the working space provides a more ergonomic way of indicating an operating status of the clipping machine. This prevents the technical problem that operators miss key information, which may result in safety hazards, damages to the clipping machine, production of waste, production downtimes or the like.

In a first preferred embodiment, the operating status is at least one of a safety status indicating a safety relevant operation status of the clipping machine, a function status indicating a currently executed function of the clipping machine and a consumable status indicating a fill level of consumables, preferably a fill level of closure clips. Consumables of a clipping machine are used up during the production of products. Such consumables can be closure clips, labels, suspension elements and/or packaging casings. The safety indicating status indicates a safety relevant operation status or condition of the clipping machine. For example, the safety status indicates that a door of the housing is open and allows access to the working space. The safety status may also indicate an emergency stop of the clipping machine and/or that the machine has been stopped due to an emergency stop. Such an emergency stop may for example occur if a clip gets jammed in the clipping tool assembly or if a person tries to reach into the working space. A function status indicates a currently executed function of the clipping machine. It shall be understood that the currently executed function can include situations in which the clipping machine is not operated or waiting respectively. For example and preferably, an operating status may be a status in which the clipping machine is ready for operation. Another operating status can be a status in which an operator has requested a start of operation and the clipping machine is currently in start-up status. A consumable status indicates a fill level of a consumable and/or indicates that a stock of consumables is depleted. For example, the consumable status may indicate that the clipping machine has run out of closure clips and/or that the clipping machine will soon run out of closure clips. Preferably, the clipping machine is configured to measure an amount of consumables. Additionally or alternatively, the clipping machine can be configured to indirectly determine an amount of available consumables. For example, the clipping machine, preferably the lighting controller, can calculate the remaining number of consumables from a number of cycles performed since consumables have been refilled. It shall be understood that a fill level can be a number of consumables available for production in case the consumable can be measured discretely (e.g. a number of clips). However, the fill level can for example also be a remaining length of a clip strip. It shall be understood that the lighting controller can be configured to determine only a safety status, a function status or a consumable status. In other embodiments, the lighting controller can be configured to determine a safety status and a function status, a safety status and a consumable status, a function status and a consumable status or can be configured to determine a safety status, a function status and a consumable status.

Preferably, the safety status is at least one of an emergency stop status, a working space accessible status, a maintenance required status, a low air pressure status and/or a low lubrication status. The working space accessible status indicates that the working space is accessible by a person. For example, the working space accessible status may indicate that a door and/or front cover of the housing is open such that a person can easily reach into the clipping tool assembly. The clipping machine may have a low air pressure status if a pressure level of compressed air supplied to the clipping machine lies below a minimum pressure level required for safe operation of the clipping machine. Preferably, the clipping machine has a low lubrication status if one or more parts of the clipping machine that require lubrication are not sufficiently lubricated and/or not optimally lubricated.

In a preferred embodiment, the function status is at least one of an in-production status, a start initiated status, a stop initiated status, a ready status, a starting position requested status and/or a waiting status. The clipping machine is in the in-production status if it is currently producing sausage shaped products. When a user has initiated a stop of the clipping machine but the clipping machine has not yet fully stopped, the clipping machine is in the stop initiated status. For example, the clipping machine can have the stop initiated status if a user has requested a stop of the clipping machine but production of a last sausage-shaped product has yet to be finished. A ready status indicates that the clipping machine is ready for production. The clipping machine can have a starting position requested status when an operator has requested the clipping machine to return to a starting position. For example, the clipping tool assembly may need to return to a starting position following an emergency stop. In such a situation the operator may request a starting position. The clipping machine can have the starting position requested status when the clipping machine moves to the starting position.

The clipping machine may have the waiting status during operation. Preferably, the clipping machine assumes the waiting status when the clipping tool assembly is not operated. Preferably, the clipping machine has the waiting status while a packaging casing is filled with filling material and when the clipping tool assembly is not yet operated for closing the packaging casing. During production of very large sausages, the filling of a packaging casing can take significantly more time than the time required for applying one or more closure clips to the packaging casing. The filling time can limit the cycle rate or number of products that can be produced in a certain time. Determining the waiting status and providing light of a predetermined color allows the operator to realize that not the clipping tool assembly limits the cycle rate but that the filling speed should be increased (if possible). Determining a waiting status can therefore allow optimization of the production process. The waiting status preferably indicates that the clipping machine is waiting for an external machine collaborating with the clipping machine, in particular an external filler connected to the filling tube.

Preferably, the consumable status is at least one of a consumable depleted status, a consumable low status, a consumable full status, a consumable refill required status and/or a consumable refill recommended status. The consumable status preferably indicates an amount of consumables, in particular clip, stored in a consumable magazine of the clipping machine or on a clip reel provided to the clipping machine. The clipping machine can have the consumable low status if the remaining amount of a specific consumable or of multiple consumables is below a threshold amount and/or only allows continued operation for a limited time (that can be predefined). For example, the clipping machine can have the consumable low status if 50 or less closure clips, labels and/or suspension elements remain, if 40 or less closure clips, labels and/or suspension elements remain, if 30 or less closure clips, labels and/or suspension elements remain. The clipping machine can assume the consumable depleted status if at least one consumable required for production is depleted. Preferably, the clipping machine is configured to perform up to 50, preferably up to 40, preferably up to 30, preferably up to 20, preferably 15 to 30, additional closing cycles after it has assumed the consumable depleted status. For example, in cases in which a sensor for measuring a clip supply is used, this sensor may be positioned at a certain distance from tools of the clipping machine. In such cases the sensor may not sense any more clips but there may still remain a small supply of clips that can be used up by performing additional closing cycles.

In a preferred embodiment, the lighting controller is configured to determine an external operating status of an external machine collaborating with the clipping machine and to control the lighting assembly such that the color of light provided by the lighting assembly indicates the external operating status of the external machine. Preferably, the external machine can be a filler providing filling material to the clipping machine. The clipping machine, in particular a main control unit of the clipping machine, can be configured to control the external machine. The external operating status indicates a current status of the external machine. For example, the external operating status can indicate that the external machine is currently operated. If the external machine is a filler, the external operating status may indicate that the filler is currently providing filling material to the filling tube of the clipping machine. Multiple machines of a production system can influence the overall efficiency. According to the preferred embodiment, the operator can gain information from the clipping machine even if an external machine of such a production system is not configured to provide status information to the operator. Moreover, the clipping machine of the preferred embodiment solves the technical problem that finding limiting factors of a production system is often tedious.

It shall be understood that light of one color preferably represents an external operating status as well as an operating status of the clipping machine. Preferably, a certain color of light can be provided only if a matching pair of an operating status of the clipping machine and of an external operating status of an external machine are simultaneously provided. For example, the lighting controller can control the lighting assembly such that blue light is only provided if a filler attached to the filling pipe of the clipping machine is currently in operation to fill a packaging casing and if simultaneously the clipping tool assembly is not in operation or waiting for the packaging casing to be ready for application of a closure clip.

Preferably, the clipping machine is configured to receive external signals from an external machine for determining the external operating status. Additionally or alternatively, the clipping machine can be configured to determine the external operation status from control signals provided from the clipping machine to the external machine. The clipping machine can alternatively or additionally comprise one or more sensors or cameras for determining the external operating status.

In preferred embodiments, the lighting controller is configured to control the lighting assembly such that light of the first color is provided for illuminating the working space when the clipping tool assembly is operated and that light of the second color is provided for illuminating the working space when the clipping tool assembly is waiting during filling of the packaging casing.

Preferably, the clipping machine comprises a wireless communication device for receiving wireless signals and/or comprises a signal connector for connecting one or more signal lines providing signals. The clipping machine can be configured to provide signals and/or to receive signals with the wireless communication device and/orthe signal connector. The wireless communication device and/or the signal connector can be connected to a main control unit of the clipping machine and/or to the lighting controller.

The lighting controller is preferably configured to control the lighting assembly to provide pulsating light. The light source is then preferably configured to provide pulsating light.

Preferably, the lighting controller is configured to control the lighting assembly such that a light mode of the lighting assembly is chosen dependent on the determined operating status. Light modes of the lighting assembly can include pulsating light, blinking light and continuous light.

Blinking light is provided with a certain frequency and flashes on and off (i.e. an almost instant change between off and on). A pulsating light is preferably provided with a certain frequency. Pulsating light gradually changes its brightness. For example, a luminous flux (measured in lumen) may gradually change for pulsating light. Preferably, the lighting controller is configured to control the lighting assembly to provide pulsating light of a frequency in a range of 10 Hz or less, preferably 1 Hz or less, particularly preferred 0.5 Hz or less, preferably 0.4 Hz or less, particularly preferred 0.35 Hz or less. Pulsating light is generally conceived as less stressful than blinking light but draws more attention than continuous light. Providing pulsating light allows a more ergonomic way to light the working space.

According to a preferred embodiment, the housing comprises at least one window for viewing the enclosed working space from the outside, the window comprising a transparent window pane. A transparent window pane allows the light of the first color and/or the light of the second color to be visible from the outside. A transparent window pane can be clear or frosted. Preferably, the window pane is shatter proof. Preferably, the window pane is at least partially made from a safety glass and/or a plastic material, in particular polycarbonate material.

Preferably, the light source is provided in a frame of the window pane for illuminating an edge of the window pane. The working space is then preferably directly illuminated via the light provided from the frame and/or indirectly via light travelling through the window pane to the working space. The preferred embodiment prevents obstruction of the light and ensures visibility from the outside. Moreover, a light source provided in the frame of the window pane can prevent an operator from being dazzled. The frame of the window pane and the window pane can protect the light source and/or diffuse light provided by the light source.

Preferably, the light source is arranged such that it shines away from the window. This can prevent an operator from being dazzled.

Preferably, the housing comprises at least one slit, wherein the slit is configured such that the light of the first color and/or the second color is visible from outside the housing.

In a preferred configuration, the housing of the clipping machine comprises a door allowing access to the working space, wherein the light source is arranged on the door. This allows easy access to the light source for cleaning and/or maintenance.

Preferably, the lighting controller is configured to operate the lighting assembly such that white light is provided if the door is open. This is also preferred for lighting assemblies that do not have a light source arranged on the door.

In some embodiments, the lighting assembly comprises a diffusor for diffusing light provided by the light source. Diffused light prevents reflections and can facilitate monitoring of the working space from the outside.

Preferably, the light source is protected against harmful ingress of water according to IPX6 or higher. In particularly preferred embodiments, the light source fulfills the standard IP69K. IP stands for International Protection and is defined under the international standard IEC 60529. In particular if the clipping machine is used for food production, it needs to be cleaned regularly and thoroughly. The preferred protection allows arrangement of the light source in the enclosed working space.

Preferably, the clipping machine is configured to determine a supply level of closure clip provided for the clipping machine, in particular to a magazine bar of the clipping machine or on a clip reel, wherein the lighting controller is configured to control the lighting assembly such that the color of light provided by the lighting assembly indicates the determined supply level of closure clip.

According to a second aspect, the invention solves the above-mentioned problem with a method for operating a clipping machine, preferably a clipping machine according to the first aspect of the invention, comprising a housing defining an at least partially enclosed working space, at least one filling tube for feeding the filling material into the packaging casing stored on the at least one filling tube, a clipping tool assembly for applying one or more closure clips to the packaging casing for closing the packaging casing, wherein at least the clipping tool assembly is at least partially arranged in the working space, and a lighting assembly comprising at least one light source, the method comprising the steps of: Determining whether a packaging casing is currently filled with filling material through the filling tube or whether the clipping tool assembly is currently operated for closing the packaging casing; and illuminating the working space with light of a first color if the packaging casing is currently being filled and with light of a second color if the clipping tool assembly is currently operated for closing the packaging casing.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of' items comprising also the number 1, i.e. a single item, and further numbers like 2, 3, 4 and so forth.

In the accompanying drawings:
- Fig. 1: is a schematic view showing the principal design of a clipping machine attached to a filler,
- Fig. 2: is a schematic view showing the clipping machine including a housing;
- Fig. 3a: is a detail view showing a front wall of the housing having a window;
- .Fig. 3b: is a cut-view through the window of Fig. 3a along cut-line A-A; and
- Fig. 4: is a schematic block diagram illustrating operation of the clipping machine.

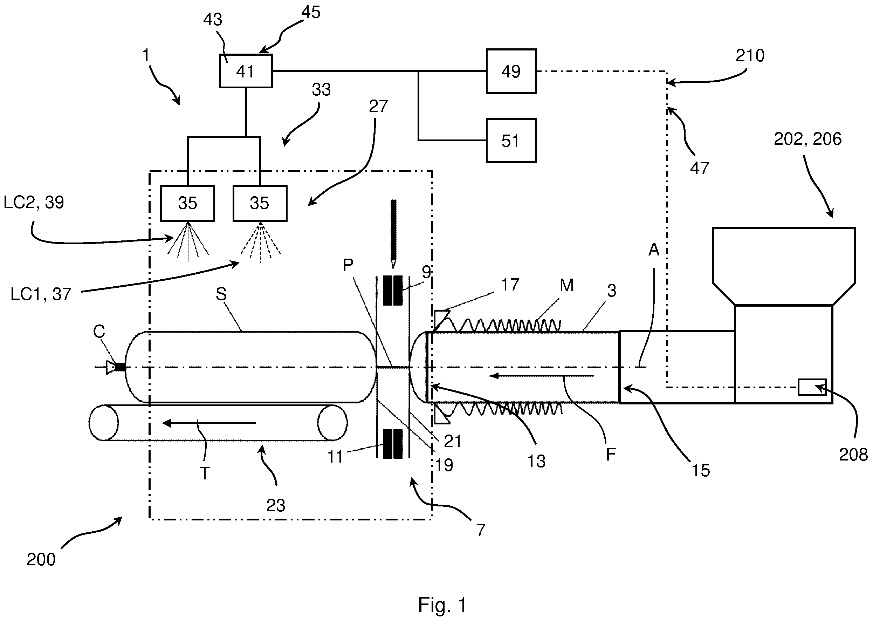

The clipping machine 1 for producing sausage-shaped products S according to Fig. 1, comprises a filling tube 3 having a longitudinally extending central axis A and a clipping tool assembly 5. Here the filling tube 3 is made of stainless steel. A tubular packaging casing M is stored on the filling tube 3 in a shirred form. The clipping tool assembly 5 is configured to apply a closure clip to the packaging material M to form a sausage-shaped product S. In particular, the clipping tool assembly 5 applies the closure clip C to a plait-like portion P. For forming the plait-like portion P, the clipping tool assembly 5 comprises gathering means 7. A first closing tool 9 and a second closing tool 11 of the clipping tool assembly 5 are configured for closing the closure clip C around the plait-like portion P.

In the embodiment of Fig. 1, filling tube 3 is arranged horizontally. A left end 13 of the filling tube 3 faces the clipping tool assembly 5 while a right end 15 of the filling tube 3 is coupled to a filler 202. The filler 202 is here not part of the clipping machine 1. Together, the clipping machine 1 and the filler 202 for a production system 200 for producing sausage-shaped products. The filler 202 comprises a pump for feeding filling material through filling tube 3 in a feeding direction F. A casing brake device 17 is arranged on filling tube 3 close to left end 13 in order to control the movement of tubular packaging casing M when pulled-off from filling tube 3 by the filling pressure of the filling material.

The clipping tool assembly 5 is provided downstream of filling tube 3 in the feeding direction F of the filling material through the filling tube 3. In the present embodiment, the first and a second closing tool 9, 11 are configured as a punch and a die. However, in some embodiments the clipping tool assembly can comprise multiple punches and dies to apply multiple closure clips C in one stroke. A cutting device may be provided for separating the product P from the supply of packaging casing M stored on the filling tube 3.

Gathering means 7 includes a first displacer unit 19 and a second displacer unit 21, wherein first displacer unit 19 is positioned downstream of second displacer unit 21. The first and second closing tools 9, 11 of clipping tool assembly 5 are positioned between first and second displacer units 19, 21, and are driven in known manner by a drive device (not shown) between an open position and a closed position.

For discharging sausage-shaped product S just produced from the clipping machine 1 a transportation device in the form of a belt conveyor 23 is arranged downstream of the clipping tool assembly 5. However, it shall be understood that other types of conveyors can be provided instead of a belt conveyor. Here a transport direction of the belt conveyor 23 is parallel to the feeding direction F. The belt conveyor 23 is arranged such that a respective portion of a belt of the belt conveyor 23 contacts an underside of the sausage-shaped product S discharged from clipping machine 1.

During production of sausage-shaped products S, filling material is fed through filling tube 3 into tubular packaging casing M which is closed at its front end by a closure clip C. During this filling process, the clipping tool assembly 5 stands still or is waiting until a sufficient amount of filling material has been fed into the tubular packaging casing M. After the required amount or a predefined portion of filling material has been fed into tubular packaging casing M, the first and second displacer units 19, 21 of gathering means 7 form a plait-like portion P to the tubular packaging casing M. For this purpose, first displace unit 19 is moved away from second displacer unit 21 in the feeding direction F. Thereafter, two closure clips C are attached to the plait-like portion P by the closing tools 9, 11. A first closure clip C is applied to plait-like portion P in order to close the just filled section of the tubular casing packaging M, and the second closure clip C in order to close the front end of the remaining tubular packaging casing M.

The clipping tool assembly 5 is provided in a working space 27 of the clipping machine 1. To prevent people from reaching into moving parts of the clipping tool assembly 5, the working space 27 is enclosed by a housing 25 of the clipping machine 1. For illustrative purposes, a housing 25 of the clipping machine 1 is not shown in Fig. 1.

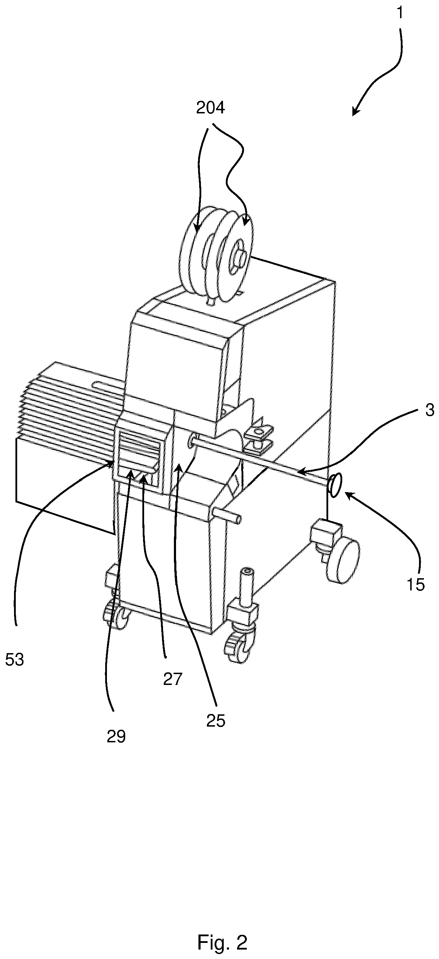

Fig. 2 shows a perspective view of the clipping machine from outside the working space 27. As can be inferred from Fig. 2, filling tube 3 extends into housing 25 or working space 27 respectively. The belt conveyor 23 extends out of working space 27 on a side opposite the filling tube 3. Filler 202 is not shown in Fig. 2. On top of the clipping machine 1, two clip reels 204 are provided. The clip reels 204 form a storage of closure clips C for the clipping machine 1. During production of sausage-shaped products P, closure clips C are drawn in by the clipping tool assembly 5.

In the embodiment of the clipping machine 1 shown in Fig. 2, housing 25 comprises a window 29. Window 29 allows an operator to look into working space 27 from the outside. This enables an operator to monitor operation of the clipping machine 1. In the present embodiment, window 29 has a clear window pane 31. However, in other embodiments, window pane 31 could also be frosted.

The housing 25 is configured such that light provided to the working space 27 is visible from the outside. In the preferred configuration shown in the figures, light provided to the working space 27 of the clipping machine 1 is visible from the outside through window 29. However, it shall be understood that no window 29 is required in order for the light to be visible from the outside. For example, the housing could have a partially transparent wall and/or one or more slits, openings or the like could be provided in the housing 25 to allow light to be visible from the outside.

The working space is illuminated by a lighting assembly 33 of the clipping machine 1. Fig. 1 illustrates a lighting assembly 33 having two light sources 35. In the shown embodiment, the light sources are formed as LED-strips each having a plurality of LEDs. Each LED strip is configured to provide light of a first color LC1 (represented by dashed-lines 37 in Fig. 1) and light of a second color LC2 (represented by dotted-lines 39 in Fig. 1). A lighting controller 41 controls operation of the lighting assembly 33. In particular, lighting controller 41 controls a light mode of the light sources 35 as well as the color of light provided by the light sources 35. Here, the lighting controller 41 is configured to switch the light sources 35 on and off. Moreover, the lighting controller 41 of the clipping machine 1 is preferably configured to switch between a blink mode of the light sources 35, a pulsating mode of the light sources 35 and a constant light mode of the light sources 35. In the blink mode, the light sources 35 are switched on and off repeatedly. In the pulsating mode, the brightness of light provided by the light sources 35 gradually increases and decreases.

In the embodiment shown in Fig. 1 and preferably, the lighting controller 41 is formed by a main control unit 43 of the clipping machine 1. Besides the lighting assembly 33, the main control unit 43 also controls operation of the clipping tool assembly 5.

The lighting controller 41 can control the lighting assembly 33 such that the color of light provided by the light sources 35 changes. In the preferred embodiment, the lighting controller 41 choses the light mode of the light sources 35 as well as the color of light provided by the light sources 35 for illuminating the working space 27 dependent on an operating status 45 of the clipping machine 1. Preferably, the lighting controller 41 further controls the light mode and the light color based on an external operating status 47 of an external machine 206, which is here formed by the filler 202.

The lighting controller 41 is configured to determine the operating status 45 of the clipping machine 1. In the present embodiment and preferably, the main control unit 43 forms the lighting controller 41. The lighting controller 41 can therefore indirectly determine the operating status 45 of the clipping machine 1 based on its control of the clipping machine 1. For example, the main control unit 43 can determine that the clipping tool assembly 5 is currently in operation to apply a closure clip C to the plait-like portion P as it has itself controlled the clipping tool assembly 5 to do so. In other embodiments, the lighting controller 41 could also determine the operating status 45 of the clipping machine 1 from sensor signals and/or sensor data provided from one or more sensors (for example a light barrier). Moreover, the lighting controller 41 can be configured to receive operating data representing the operating status 45 from a control unit of the clipping machine 1 and/or an external source.

For determining the external operating status 47, the lighting controller 41 is connected to a filler controller 208 of the filler 202. Here, connection of the lighting controller 41 and the filler controller 208 is established via a signal connector 49 of the clipping machine 1 and a signal line 210. In other embodiments, the filler 202 and the clipping machine 1, in particular the lighting controller 41 of the clipping machine 1, can be connected wirelessly. A wireless communication device 51 of the clipping machine 1 for sending and or receiving wireless signals is illustrated in Fig. 1.

Preferably, the main control unit 43 of the clipping machine 1 forming the lighting controller 41 controls operation of the filler 202. The main control unit 43 is configured to provide corresponding control commands to the filler 202 via connector 49 and signal line 210. The lighting controller 41 is configured to determine the external operating status 47 of the filler 202 from these control commands. Additionally or alternatively, the lighting controller 41 can be configured to determine the external operating status 47 from status signals and/or status data provided from the external machine 206 to the lighting controller 41. Moreover, the clipping machine 1 can comprise one or more sensors (not shown). Sensor signals and/or sensor data provided by such a sensor can be used by the lighting controller 41 to directly and/or indirectly determine the external operating status 47. For example, such a sensor could be provided for measuring a flow of filling material in the filling tube 3 and/or a pressure of filling material in the filling tube 3 in order to determine whether the filler 202 is currently operating or not. Alternatively or additionally, a sensor could measure a filling level of a tank of the filler 202.

After determining the operating status 45 of the clipping machine 1 and/or the external operating status 47 of the external machine 206, the lighting controller 41 controls the lighting assembly 33 based on the determines status 45, 47. For example, the lighting controller 41 can control the lighting assembly 33 such that the light sources 35 of the lighting assembly 33 illuminate the working space 27 of the clipping machine 1 with pulsating blue light if the external operating status 49 indicates that the filler 202 is operated in order to feed filling material into the packaging casing M via the filling tube 3 and the operating status 47 indicates that the clipping tool assembly 5 waits until a required amount of filling material has been fed into the packaging casing M.

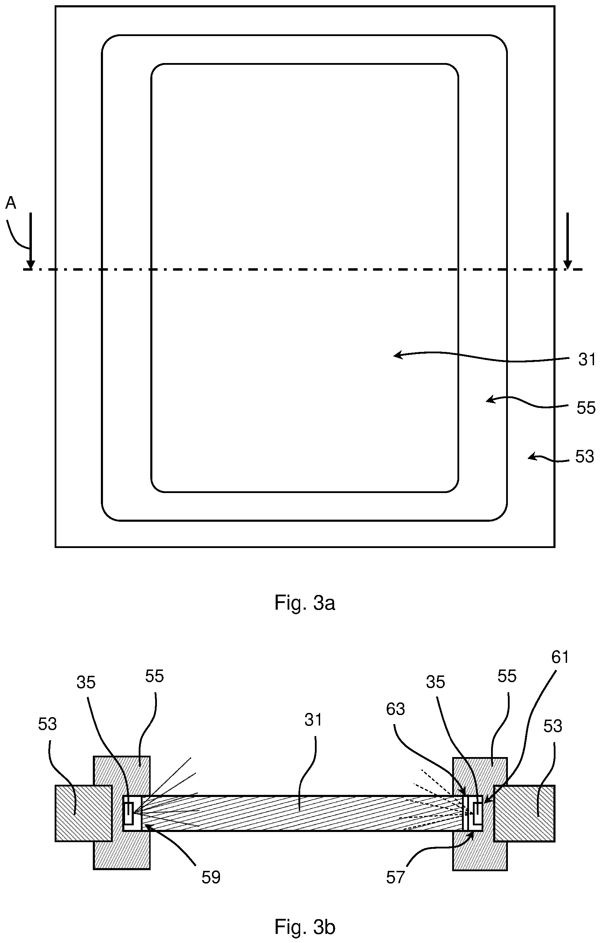

Fig. 3a shows the window 29 of the clipping machine 1 in detail. The window 29 is provided in a front wall 51 of housing 25. The front wall 51 is arranged substantially parallel to the filling tube 3 of the clipping machine 1. Window 25 has a substantially rectangular shape. However, in other preferred embodiments, the window 25 could be round, oval or could have any other shape. In the present embodiment, the window pane 31 of the window 25 is made from a plastic material, in particular polycarbonate.

Window pane 31 is held by a frame 55 of window 25. The frame 55 can be a metal frame. In the present embodiment, frame 55 is a rubber frame. Fig. 3b is a cut view of the window 25 along line A of Fig. 3a. As can be inferred from this cut view, window pane 31 is held in a groove 57 of frame 55. Preferably, a light source 35 of the lighting assembly 33 is provided between a lateral side 59 of window pane 31 and a groove bottom 61 of groove 57. Here light source 35 is an LED strip that extends along groove 57. The light source 35 is configured to emit light towards the lateral side 59 of window pane 31. Through this, window pane 31 is illuminated from the lateral side 59 and appears to glow. Such a glowing window pane 31 does not dazzle an operator and therefore allows continuous monitoring of the production process which can help to reduce downtimes and/or improve quality. Light entering the working space 27 through the window pane 31 illuminates the working space 27. It shall be understood that light directly illuminating the window pane 31 is understood as light illuminating the working space 27. In the shown embodiment, the lighting assembly 33 further comprises a diffusor 63. The diffusor 63 diffuses light emitted by the light source 35 and avoids reflections which can disturb monitoring of the operation of the clipping machine 1. It shall be understood that diffusors 63 can also be provided to light sources 35 that are not arranged in a frame 55 of a window 25. A diffusor 63 for diffusing light is preferred but not essential for the clipping machine 1.

During production of sausage-shaped products P, it may occur that the packaging casing M tears or ruptures. Filling material can then spill into the working space 27. In this case, it is necessary to clean the working space 27 in order to remove the filling material. In particular during food production, regular cleaning of the packaging machine 1 is mandatory to fulfill hygiene requirements. Often large amounts of water of cleaning fluids are applied to the packaging machine 1 for cleaning. To avoid water ingress and/or damages to the light sources 35 of the lighting assembly 33, at least the light sources 35 are preferably protected against harmful ingress of water according to standard IPX6 or higher. Preferably, the entire lighting assembly 33 and/or the entire clipping machine 1 is protected according to this standard.

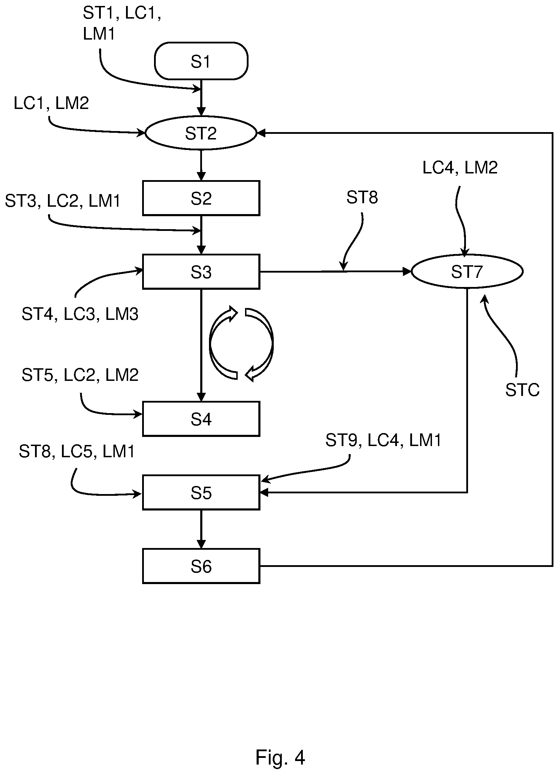

Fig. 4 shows a block diagram illustrating operation of the clipping machine 1. In a first step S1, the clipping machine 1 is turned on by an operator. During startup, the lighting controller 41 determines that the clipping machine 1 has a startup status ST1 but is not yet ready for operation. While the clipping machine 1 has the startup status ST1, the lighting controller 41 controls the lighting assembly 33 such that at least one of the light sources 35 provides light of a first color LC1 and with a first light mode LM1. In this example, the first color LC1 is white and the first light mode LM1 is blinking light. In the embodiment of Fig. 4, the working space 27 is thus illuminated with blinking white light during startup of the clipping machine 1. Once the clipping machine 1 is ready for operation, it assumes a ready status ST2. The ready status ST2 is determined by the lighting controller 41, which then controls the lighting assembly 33 such that at least one of the light sources 35 provides light of the first color LC1 but with a second light mode LM2. The second light mode LM2 is continuous light, such that the working space 27 is illuminated with continuous white light when the clipping machine 1 is ready to start operation.

In a second step S2, an operator activates the machine or initiates production of sausage-shaped products respectively. The clipping machine 1 assumes a start initiated status ST3, in which light of a second color LC2 and with the first light mode LM1 is provided. In the present example, the second color LC2 is green. Until the clipping machine 1 has started normal operation (but after start of production has been initiated by an operator), at least one of the light sources 35 therefore provides blinking green light. In a third step S3, the clipping machine 1 has started normal operation. In the third step S3, the packaging casing M is filled with filling material via the filling tube 3. The lighting controller 41 correspondingly determines a filling status ST4 and controls the lighting assembly 33 to provide light of a third color LC3 and with a third color mode LM3. In the present embodiment, the filling status ST4 is also a waiting status ST4, since the clipping tool assembly 5 is waiting for the packaging casing M to be fully filled. In the embodiment illustrated in Fig. 4, the third color LC3 is blue and the third color mode LM3 is pulsating light. During filling of the packaging casing M the working space 27 is therefore illuminated with pulsating blue light. After a predetermined amount of filling material has been fed into the packaging casing M, the main control unit 43 initiates a clipping operation (fourth step S4) by activating the clipping tool assembly 5. During the clipping operation, the clipping machine 1 assumes an in-production status ST5. This in-production status ST5 is determined by the lighting controller 41 which then controls the lighting assembly 33 such that at least one of the light sources 35 provides light with the second color LC2 and the second color mode LM2 (i.e. continuous green light). In other embodiments, the in-production status can represent filling operation as well as a clipping operation.

The filling operation S3 and the clipping operation S4 are usually repeated multiple times to produce multiple sausage-shaped products P. The light provided by the lighting assembly 33 constantly switches between pulsating blue light (during the filling operation S3) and continuous green light (during the clipping operation S4). However, in other embodiments, continuous light of the same or of different colors could be provided during a filling operation S3 and a clipping operation S4. In particular during production of small sausage-shaped products, clipping machines 1 can reach cycle rates of 1 Hz or less, such that constant switching might put stress on the operator of the clipping machine 1.

During production, in particular during the clipping operation S4, the clipping machine 1 uses up a store of closure clips C. In the present embodiment, the closure clips are stored on the clip reels 204 provided to the clipping machine 1 shown in Fig. 2. Preferably, the lighting controller 41 is configured to determine a supply level (e.g. an amount of closure clips C remaining on clip reel 204). The lighting controller 41 is further configured to determine a consumable status STC from the determined supply level. For example and preferably, a consumable full status ST6 is determined while the clip reel 204 is at least 80% full. While the clipping machine has the consumable full status ST6, no additional light is provided in the present embodiment.

Once, the amount of closure clips C remaining on clip reel 204 drops below 20% of a total capacity of the clip reel 204 (or in other embodiments below an predetermined number of closure clips C or another threshold), the clipping machine 1 assumes a consumable refill recommended status ST7. Upon determining the refill recommended status ST7, the lighting controller 41 controls the lighting assembly 33 such that the second light source 35 provides light of a fourth color LC4 and with the second color mode LM2. Simultaneously, the lighting controller 41 controls the lighting assembly 33 such that the light provided by the first light source 35 represents the alternating filling operation (pulsating blue light) and clipping operation (continuous green light). The lighting assembly 33 is preferably configured to simultaneously represent at least two different statuses of the clipping machine 1. In the embodiment of Fig. 4, the fourth color LC4 is yellow, such that continuous yellow light is provided by one of the light sources 35 when the clipping machine 1 has the consumable refill recommended status ST7.

When sausage-shaped products P are continuously produced without refill of closure clips C, the supply of closure clips C will be fully depleted at some point. The clipping machine 1 then assumes an error status ST8 and stops operation (fifth step S5 in Fig. 4). Simultaneously, the clipping machine 1 assumes a consumable refill required status ST9. The lighting controller 41 determines the error status ST8 and controls the lighting assembly 33 such that a first light source 35 provides light of a fifth color LC5, which is red in the present embodiment. The light of the fifth color 5 is provided with the first color mode LM1 such that blinking red light is provided by at least one light source 35. The lighting controller 41 further determines the consumable refill required status ST9. Based on this status, the lighting controller 41 controls the lighting assembly 33 such that a second light source 35 provides light of the fourth color LC4 with the first color mode LM1, i.e. blinking yellow light.

Since light representing the error status ST8 as well as the consumable refill require status ST9 is provided, an operator of the clipping machine 1 can easily understand why the clipping machine 1 has stopped operation S5. After refiling closure clips C, e.g. by exchanging an empty clip reel 204 with a new, fully filled clip reel 204, an operator can reset the error status in a sixth step S6 and the clipping machine 1 returns to the ready status ST2. It shall be understood that the different statuses and corresponding colors and light modes described above with respect to Fig. 4 have been chosen as preferred examples. Of course, different light color or light modes could be assigned to the described statuses. Moreover, the lighting controller 41 need not be configured to determine all of the above statuses and/or can be configured to determine additional and/or different statuses. For example, the lighting controller 41 can be configured to determine an emergency stop status of the clipping machine 1. For such an emergency stop status the lighting controller 41 may control the lighting assembly 33 such that at least one light source provides continuous red light LC5.

### List of reference signs

- 1: clipping machine
- 3: filling tube
- 5: clipping tool assembly
- 7: gathering means
- 9: first closing tool
- 11: second closing tool
- 13: left end of filling tube
- 15: right end of filling tube
- 17: casing brake device
- 19: first displacer unit
- 21: second displacer unit
- 23: belt conveyor
- 25: housing
- 27: working space
- 29: window
- 31: window pane
- 33: lighting assembly
- 35: light source
- 37: dashed line
- 39: dotted line
- 41: lighting controller
- 43: main control unit
- 45: operating status
- 47: external operating status
- 49: signal connector
- 51: wireless communication device
- 53: front wall
- 55: frame of window
- 57: groove
- 59: lateral side of window pane
- 61: groove bottom
- 63: diffusor
- 200: production system
- 202: filler
- 204: clip reel
- 206: external machine
- 208: filler controller
- 210: signal line
- A: central axis of filling tube
- C: closure clip
- F: feeding direction
- LC1: first color, white
- LC2: second color, green
- LC3: third color, blue
- LC4: fourth color, yellow
- LC5: fifth color, red
- LM1: first light mode, blinking light
- LM2: second light mode, continuous light
- LM3: third light mode, pulsating light
- M: packaging casing
- P: plait-like portion
- S: sausage-shaped product
- S#: step
- ST1: startup status
- ST2: ready status
- ST3: start initiated status
- ST4: filling status, waiting status
- ST5: in-production status
- ST6: consumable full status
- ST7: consumable refill recommended status
- ST8: error status
- ST9: consumable refill required status
- STC: consumable status

## Claims

1. A clipping machine (1) for producing sausage-shaped products (S) by filling a filling material into a packaging casing (M) and closing the filled packaging casing (M) with at least one closure clip (C), the clipping machine (1) comprising:
a housing (25) defining an at least partially enclosed working space (27),
at least one filling tube (3) for feeding the filling material into the packaging casing (M) stored on the at least one filling tube (3),
a clipping tool assembly (5) for applying one or more closure clips (C) to the packaging casing (M) for closing the packaging casing (M), wherein at least the clipping tool assembly (5) is at least partially arranged in the working space (27), and
a lighting assembly (33) comprising at least one light source (35), the lighting assembly (33) configured to provide light of at least a first color (LC1) and a second color (LC2) for illuminating the working space (27) with light of the first color (LC1) and/or the second color (LC2),
wherein the housing (25) is configured such that the light of the first color (LC1) and/or the second color (LC2) is visible from outside the housing,
wherein the clipping machine (1) further comprises a lighting controller (41) configured to at least control the color of light provided by the lighting assembly (33),
wherein the lighting controller (41) is configured to determine at least one operating status of the clipping machine (1), and
wherein the lighting controller (41) is configured to control the lighting assembly (33) such that the color of light provided by the lighting assembly (33) for illuminating the working space (27) is chosen dependent on the determined operating status (45).

2. The clipping machine (1) of claim 1, wherein the operating status (45) is at least one of a safety status indicating a safety relevant operation status (45) of the clipping machine (1), a function status indicating a currently executed function of the clipping machine (1) and a consumable status (STC) indicating a fill level of consumables, preferably a fill level of closure clips (C).

3. The clipping machine (1) of claim 2, wherein the safety indicating status is at least one of an emergency stop status, a working space accessible status, a maintenance required status, a low air pressure status and/or a low lubrication status,
wherein the function status is at least one of an in-production status (ST5), a start initiated status (ST3), a stop initiated status, a ready status (ST2), a starting position requested status and/or a waiting status (ST4); and/or
wherein the consumable status (STC) is at least one of a consumable depleted status, a consumable low status, a consumable full status (ST6), a consumable refill required status (ST9) and/or a consumable refill recommended status (ST7).

4. The clipping machine (1) of any of claims 1 to 3, wherein the lighting controller (41) is configured to determine an external operating status (47) of an external machine (206) collaborating with the clipping machine (1) and to control the lighting assembly (33) such that the color of light provided by the lighting assembly (33) indicates the external operating status of the external machine (206).

5. The clipping machine (1) according to claim 4, wherein the clipping machine (1) is configured to receive external signals from the external machine (206) for determining the external operating status (47).

6. The clipping machine (1) according to any of claims 1 to 5, wherein the lighting controller (41) is configured to control the lighting assembly (33) such that light of the first color (LC1) is provided for illuminating the working space (27) when the clipping tool assembly (5) is operated and that light of the second color (LC2) is provided for illuminating the working space (27) when the clipping tool assembly (5) is waiting during filling of the packaging casing (M).

7. The clipping machine (1) according to any of claims 1 to 6, wherein the clipping machine (1) comprises a wireless communication device (51) for receiving wireless signals and/or comprises a signal connector (S) for connecting one or more signal lines providing signals.

8. The clipping machine (1) according to any of claims 1 to 7, wherein the lighting controller (41) is configured to control the lighting assembly (33) to provide pulsating light, preferably pulsating light with a frequency in a range of 10 Hz or less, preferably 1 Hz or less, particularly preferred 0,5 Hz or less.

9. The clipping machine (1) according to any of claims 1 to 8, wherein the housing (25) comprises at least one window (29) for viewing the enclosed working space (27) from the outside, the window (29) comprising a transparent window pane (31), wherein the light source (35) is preferably provided in a frame (55) of the window (29) for illuminating an edge of the window pane (31).

10. The clipping machine (1) according to claim 9, wherein the light source (35) is arranged such that it shines away from the window (29).

11. The clipping machine (1) according to any of claims 1 to 9, wherein the housing (25) comprises at least one slit, wherein the slit is configured such that the light of the first color (LC1) and/or the second color (LC2) is visible from outside the housing.

12. The clipping machine (1) according to any of claims 1 to 11, wherein the housing (25) comprises a door allowing access to the working space (27), wherein the light source (35) is arranged on the door.

13. The clipping machine (1) according to any of claims 1 to 12, wherein the lighting assembly (33) comprises a diffusor (63) for diffusing light provided by the light source (35).

14. The clipping machine (1) according to any of claims 1 to 13, wherein the light source (35) is protected against harmful ingress of water according to IPX6 or higher.

15. The clipping machine (1) according to any of claims 1 to 14, wherein the clipping machine (1) is configured to determine a supply level of closure clip (C) provided for the clipping machine (1), in particular to a magazine bar of the clipping machine (1) or on a clip reel (204), wherein the lighting controller (41) is configured to control the lighting assembly (33) such that the color of light provided by the lighting assembly (33) indicates the determined supply level of closure clip (C).
